# EUROPEAN PATENT APPLICATION

(11) **EP 0 651 375 A1**
(43) Date of publication of application: **03.05.1995**
(21) Application number: 94307830.3
(22) Date of filing: 25.10.1994
(51) Int. Cl.: G11B 5/40, G11B 5/39

(54) **Magnetoresistive head**

(30) Priority: 29.10.1993 US 145368
(71) Applicant: International Business Machines Corporation, Armonk, N.Y. 10504 (US)
(72) Inventor: Barlow, Irmela Christiane, Los Altos, CA 94024 (US); Garfunkel, Glen Adam, Los Gatos, CA 95030 (US); Hoyt, Roger F., San Jose, CA 95120 (US); Marrello, Vincent, Morgan Hill, CA 95037 (US); McWilliams, Christian,jr., San Jose, CA 95123 (US); Wallash, Albert John, Morgan Hill, CA 95037 (US)
(74) Representative: Williams, Julian David

(57) **Abstract**

Electrically conductive protective devices provide a current path shunting the magnetoresistive (MR) sensor element (35) in a magnetic head assembly (21) to discharge static electrical charges without damage to the MR sensor element. A variable conductance device (80) having a nonlinear current-voltage characteristic, such as a pair of Schottky diodes, for example, is connected between the MR sensor element leads in parallel with the MR sensor element or between each MR sensor element lead and a ground reference, the MR sensor element magnetic shields, for example, to provide a discharge current bypass path. Alternatively, one or more bleed resistors (133) are connected between the MR sensor element leads and a ground reference to provide the current bypass path thus allowing any static charge to bleed off.

## Description

The present invention relates generally to electrical protection circuitry for magnetic disk drives and more particularly to such circuitry to protect against electrostatic discharge or electrical overstress in read/write transducers utilizing magnetoresistive read sensors.

Magnetic head disk drive systems have been widely accepted in the computer industry as a cost effective form of data storage. In a magnetic disk drive system a magnetic recording medium, in the form of a disk, rotates at high speed while a magnetic read/write transducer, referred to as a magnetic head, "flies" slightly above the surface of the rotating disk. The magnetic disk is rotated by means of a spindle drive motor. The magnetic head is attached to or formed integrally with a "slider" which is suspended over the disk on a spring-loaded support arm known as the actuator arm. As the magnetic disk rotates at operating speed the moving air generated by the rotating disk in conjunction with the physical design of the slider operate to lift the magnetic head allowing it to glide or fly slightly above and over the disk surface on a cushion of air, referring to as an air bearing. The flying height of the magnetic head over the disk surface is typically only a few microinches or less and is primarily a function of disk rotation, the aerodynamic properties of the slider assembly and the force exerted by the spring-loaded actuator arm.

A major problem that is encountered during manufacture, handling and use of magnetic recording transducers, referred to as heads, is the buildup of electrostatic charges on the various elements of a head or other objects which come into contact with the heads, particular heads of the thin film type, and the accompanying spurious discharge of the static electricity thus generated. Static charges may be produced by the presence of certain materials, such as plastics, during manufacture and subsequent handling of the heads, for example. These charges arc across the edge of the insulating layer between the magnetic pole tips and adjacent conductive layers which are exposed and positioned adjacent to the transducing gap at the air bearing surface facing the recording medium thus causing erosion of the pole tips and degradation of the transducer in reading and writing of data.

The above-described electrostatic discharge (ESD) problems associated with thin film inductive read/write heads are well-documented and several solutions have been proposed. U.S. Patent No. 4,317,149 discloses an inductive head having short discharge paths formed by the deposition of conductive material in the recesses of an insulating layer so that the static electric discharge will occur in areas displaced from the critical pole tip and gap area at the slider air bearing surface. U.S. Patent No. 4,800,454 discloses an inductive head assembly wherein the magnetic pole piece and the inductive winding is coupled to the slider to allow discharge of any static electric charges which may build up. The winding is connected to the slider body via a diode with high forward and reverse voltage drops, or through a fusible link.

Magnetoresistive (MR) sensors are well known and are particularly useful as read elements in magnetic transducers, especially at high recording densities. The MR read sensor provides a higher output signal than an inductive read head. This higher output signal results in a higher signal to noise ratio for the recording channel and thus allows higher areal density of recorded data on a magnetic disk surface to be achieved. As described above, when an MR sensor is exposed to ESD, or even a voltage or current input larger than that intended under normal operating conditions, referred to as electrical overstress or EOS, the MR read sensor and other parts of the head may be damaged. This sensitivity to electrical damage is particularly severe for MR read sensors because of these sensors' relatively small physical size. For example, an MR sensor used for extremely high recording densities will have a cross-section of 100 Angstroms (A) by 1.0 micrometers (µm) or smaller. Accidental discharge of voltages of only a few volts through such a physically small resistor is sufficient to produce currents capable of severely damaging or completely destroying the MR sensor. The nature of the damage which may be experienced by an MR sensor varies significantly, including complete destruction of the sensor via melting and evaporation, contamination of the air bearing surface, generation of shorts via electrical breakdown, and milder forms of damage in which the head performance is still degraded. This type of damage has been found to occur during both processing and use and poses a serious problem in the manufacturing and handling of magnetic heads incorporating MR read sensors.

Viewed from one aspect the present invention provides a magnetoresistive head assembly comprising: a magnetoresistive sensor element; and at least one variable conductance means having a non-linear current-voltage characteristic electrically coupled to the magnetoresistive sensor element for providing a low resistance conductive path bypassing the magnetoresistive sensor element for discharging static electrical charge.

Viewed from another aspect the present invention provides a magnetoresistive head assembly comprising: a magnetoresistive sensor element; and at least one bleed resistor electrically coupled to the magnetoresistive sensor element for providing a high resistance discharge path shunting the magnetoresistive sensor element for discharging static electric charge.

The present invention reduces damage to an MR sensor caused by discharge of static electricity through or electrical overstress of the MR sensor element and other transducer components. Non-linear conductive elements are integrated into the construction of the magnetic head or externally attached to the magnetic head to provide EOS and ESD protection by shunting excessive current away from the MR element and other critical head components. A thin film magnetic transducer is provided comprising an MR read element wherein one or more electrical conductive elements, diodes, for example, having a non-linear current-voltage characteristic provide a low-resistance, conductive path bypassing the MR sensor element for conducting spurious static electrical charge away from the MR sensor element. In accordance with the present invention, the conductive elements are connected across the MR sensor leads in parallel with the sensor element and/or between the MR sensor element leads and the MR element magnetic shield elements or the slider body, for example.

In a preferred embodiment, industry-standard thin film deposition processes are used, at wafer level, to provide protective conductive elements, diodes or non-linear resistors, for example, to integrate the protective devices with the MR head during fabrication of the head. Alternatively, discrete elements, such as diodes, may be attached to a surface of the slider body or integrated with the system electronics, such as in a suspension arm electronics module, for example. The term "diode" is used here generally to refer to any electrical device having suitable non-linear current-voltage (I-V) characteristics, such as P-N junction diodes and transistors as well as devices which operate by other mechanisms, such as space charge limited conduction (SCLC), Schottky emission, avalanche or Zener breakdown, Poole-Frenkel or tunneling, for example.

In order that the invention may be fully understood preferred embodiments thereof will now be described, by way of example only, with reference to the accompanying drawings in which:
Figure 1 is a simplified block diagram of a magnetic disk storage system embodying the present invention;
Figure 2 is a cross-sectional view of an MR read/inductive write magnetic transducer;
Figures 3a and 3b are simplified schematic diagrams illustrating protective circuitry for MR sensor elements in accordance with the present invention;
Figure 4 is a logarithmic graph illustrating the I-V characteristics for a sample MR element and various protective devices;
Figure 5 is a graph illustrating the I-V characteristic for an anti-symmetrical non-linear conductive device;
Figure 6 is a diagram illustrating the construction of a typical non-linear conductive device;
Figure 7 is a diagram illustrating the fabrication of a typical non-linear device using vacuum deposition techniques;
Figure 8 is a cross-sectional view of an MR read/inductive write magnetic transducer illustrating a preferred embodiment of the present invention;
Figure 9 is a top view of the magnetic transducer shown in Figure 8;
Figure 10 is a cross-sectional view of an MR read/inductive write magnetic transducer illustrating another preferred embodiment of the present invention;
Figure 11 is a top view of the magnetic transducer shown in Figure 10;
Figures 12a and 12b are schematic diagrams illustrating the use of diode devices to provide protection for an MR sensor in accordance with the present invention;
Figures 13a and 13b are plan views of an MR sensor element illustrating the disposition of the diode protective devices shown in Figures 12a and 12b, respectively; and
Figures 14a and 14b are diagrams illustrating the use of external protective devices in accordance with the present invention; and
Figure 15 is a schematic diagram illustrating another preferred embodiment of the present invention.

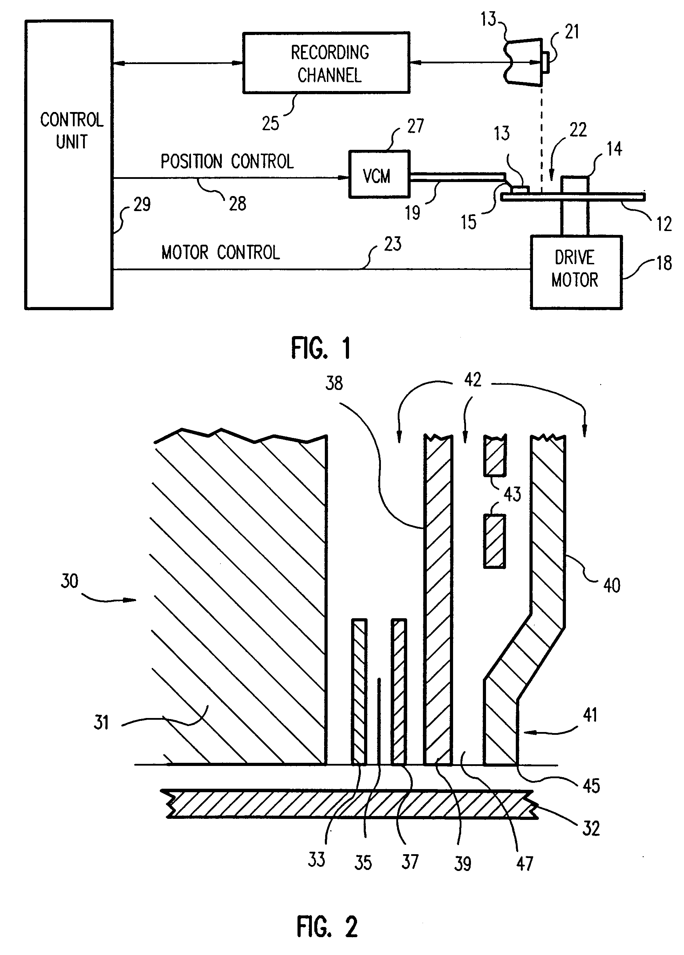

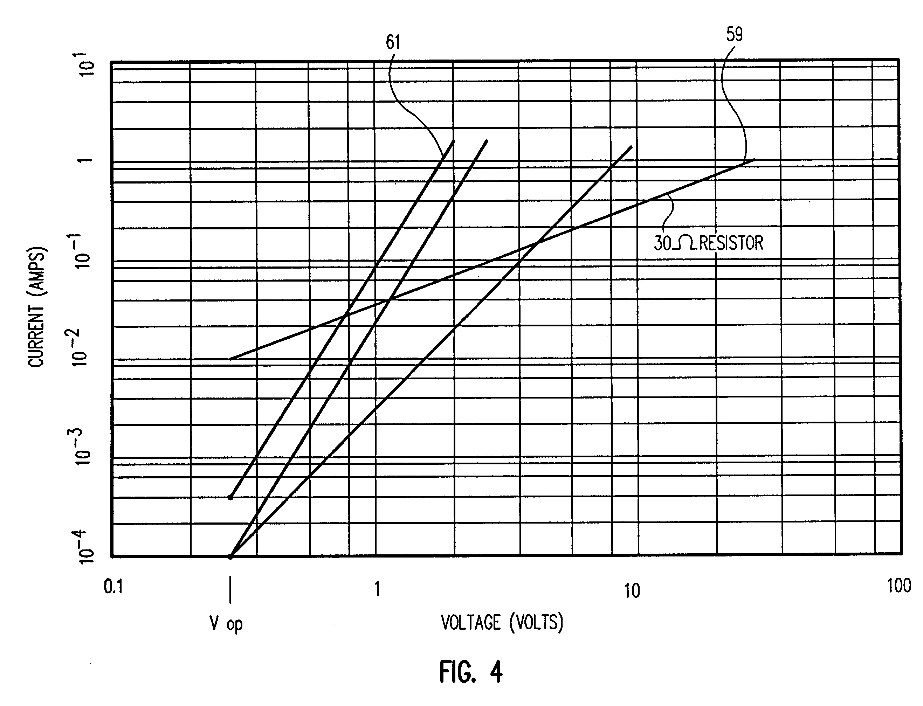

Referring now to Fig. 1, although the invention is described as embodied in a magnetic disk storage system as shown in Fig. 1, it will be apparent that the invention is also applicable to other magnetic recording systems such as a magnetic tape recording system, for example, or other applications in which a sensor is utilized to detect a magnetic field. A magnetic disk storage system comprises at least one rotatable magnetic disk 12 is supported on a spindle 14 and rotated by a disk drive motor 18 with at least one slider 13 positioned on the disk 12, each slider 13 supporting one or more magnetic read/write transducers 21, typically referred to as read/write heads. The magnetic recording media on each disk is in the form of an annular pattern of concentric data tracks (not shown) on disk 12. As the disks rotate, the sliders 13 are moved radially in and out over the disk surface 22 so that the heads 21 may access different portions of the disk where desired data is recorded. Each slider 13 is attached to an actuator arm 19 by means of a suspension 15. The suspension 15 provides a slight spring force which biases the slider 13 against the disk surface 22. Each actuator arm 19 is attached to an actuator means 27. The actuator means as shown in Fig.l may be a voice coil motor (VCM), for example. The VCM comprises a coil moveable within a fixed magnetic field, the direction and velocity of the coil movements being controlled by the motor current signals supplied by a controller.

During operation of the disk storage system, the rotation of the disk 12 generates an air bearing between the slider 13 and the disk surface 22 which exerts an upward force or lift on the slider. The air bearing thus counterbalances the slight spring force of the suspension 15 and supports the slider 13 off and slightly above the disk surface by a small, substantially constant spacing during operation.

The various components of the disk storage system are controlled in operation by control signals generated by control unit 29, such as access control signals and internal clock signals. Typically, the control unit 29 comprises logic control circuits, storage means and a microprocessor, for example. The control unit 29 generates control signals to control various system operations such as drive motor control signals on line 23 and head position and seek control signals on line 28. The control signals on line 28 provide the desired current profiles to optimally move and position a selected slider 13 to the desired data track on the associated disk 12. Read and write signals are communicated to and from read/write heads 21 by means of recording channel 25.

The above description of a typical magnetic disk storage system, and the accompanying illustration of Fig. 1 are for representation purposes only. It should be apparent that disk storage systems may contain a large number of disks and actuators, and each actuator may support a number of sliders.

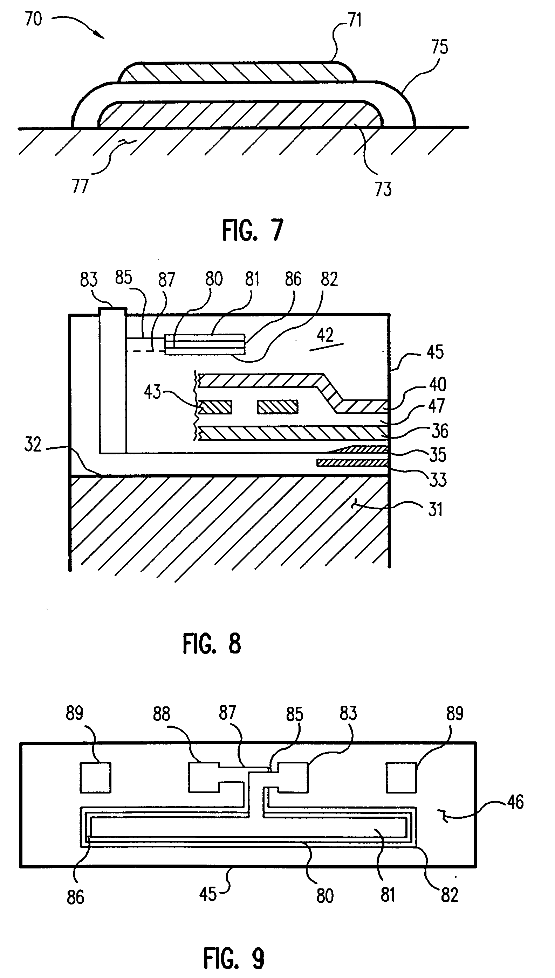

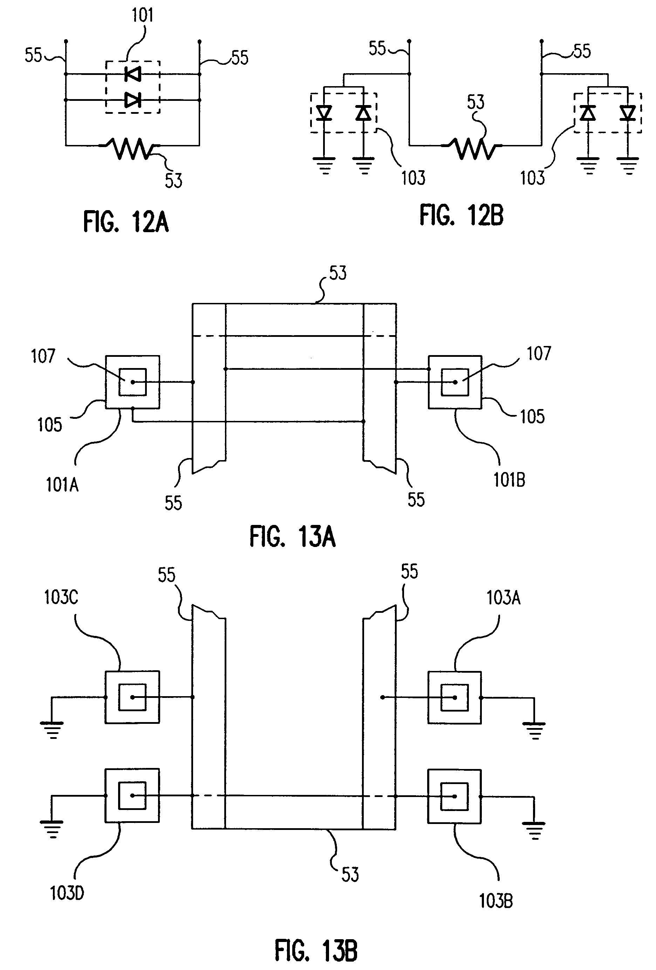

Referring now to Figure 2, a portion of a MR read/inductive write magnetic head 30 is shown in transducing relationship with a rotating magnetic recording disk 32 such that the head air bearing surface 45 is disposed in facing relationship with and slightly above the disk recording surface. Generally, such a head 30 includes an MR read assembly and an inductive write assembly formed adjacent one another on a substrate surface, the substrate surface typically being the vertical surface forming the trailing end of the slider carrying the magnetic head. The head MR read assembly comprises a MR sense element 35 of a ferromagnetic material, such as a nickel-iron (NiFe) alloy, for example, which is enclosed by first and second magnetic shield elements 33 and 37, respectively. While the MR sensing element may comprise a single layer of NiFe, referred to as Permalloy, more typically, the MR sensing element may comprise a multilayer magnetic structure including magnetic bias layers of the type described in U.S. Patent No. 4,785,366 or a multilayer magnetic structure of the type described in U.S. Patent No. 5,206,590, referred to as a spin valve sensor and utilizing the giant MR effect. The shield elements 33 and 37 are generally made of a highly permeable magnetic material, such as Permalloy or Sendust, a trialloy of aluminum-silicon-iron, and prevent magnetic interferences from affecting the MR element 35 and thereby producing extraneous electrical pulses. Conductive leads (as shown in Figs. 13a and 13b), generally copper (Cu) or other suitable conductive material, attached electrically at the end portions of the MR element 35 couple the MR element to external circuitry to provide a means for sensing the resistance of the MR element. The MR read assembly is formed by vacuum deposition techniques, such as sputter deposition, for example, on the substrate 31. The various elements of the MR assembly are surrounded and insulated from each other by layers 42 of insulating material, such as silicon dioxide or aluminum oxide, for example. The inductive write assembly comprises a lower or first pole piece 38 and an upper or second pole piece 40. The first and second pole pieces 38, 40 are made of a highly permeable magnetic material such as NiFe, for example, and form a magnetic circuit magnetically connected together at a back gap portion (not shown) with the first and second pole tips 39 and 41 forming a magnetic gap 47 at the air bearing surface 45. One or more layers of electrical conductors 43, generally made of Cu, for example, form the inductive coil disposed between the first and second pole pieces 38, 40. The poles pieces 38, 40 and the inductive coil conductors 42 are fabricated by well-known processes such as electroplating or sputter deposition, for example. The pole pieces are insulted electrically from the inductive coil and the MR read assembly by layers 42 of insulating material. Additionally, the entire assembly is covered with a capping layer 42 of insulating and protective material. The head 30 shown in Fig.2 is sometimes referred to as a "piggyback" head. An alternate configuration referred to as a "merged" head wherein the second MR magnetic shield element 37 is merged with the inductive assembly first pole piece 38 to form a single element which performs both functions is shown in Fig. 8.

As described above in the background section, static electrical charges built up on the various components of the head assembly 30 or on any object, equipment or person which may come into contact with or closely approach the head assembly or any electrical leads attached to the head assembly pose the potential for serious damage to the head. These charges are built up during the manufacturing process and during subsequent handling of the heads. For example, the assembly of the head with other components to produce a disk drive assembly can result in relatively large amounts of static electrical charge accumulating on the head elements. The electrical charges migrate from the areas at which they are generated to build up along conductive paths. Thus a buildup of static charge occurs that subsequently results in a discharge from one conductive element across a dielectric, which experiences "breakdown", to another conductive element, in the manner of a capacitive discharge. The discharge typically causes damage by burnout or the like at the areas of the conductive material which act as terminals for the discharge of the stored static electrical energy. As discussed above with reference to US Patent Nos. 4,317,149 and 4,800,454, the problems concerning electrostatic discharge (ESD) for inductive heads are well-known and the referenced patents provide methods and structure for protection of inductive heads.

While the coil conductors 43 and the magnetic pole pieces 38, 40 can withstand relatively high voltages and currents, because of its physically small cross-section, the MR sensing element is particularly sensitive to current and voltage overloads. The active sensing portion of the MR element will have a length in the range of 0.5 to 20 µm, a height (width) of 0.5 to 5 µm and a thickness of 10 to 100 nanometers (nm) and a resistance of about 20 to 80 ohms. In addition to its small physical size, the MR sensing element 35 is surrounded by, i.e., buried in, an insulating material except at the ABS. In MR read assemblies of the types shown in Figs. 2 and 8, it has been found that such damage occurs along the sensing region of the MR element 35 when the accumulated static charge is discharged directly through the MR element 35 and may or may not include discharge to the magnetic shield elements or first pole piece or the body of the slider (substrate).

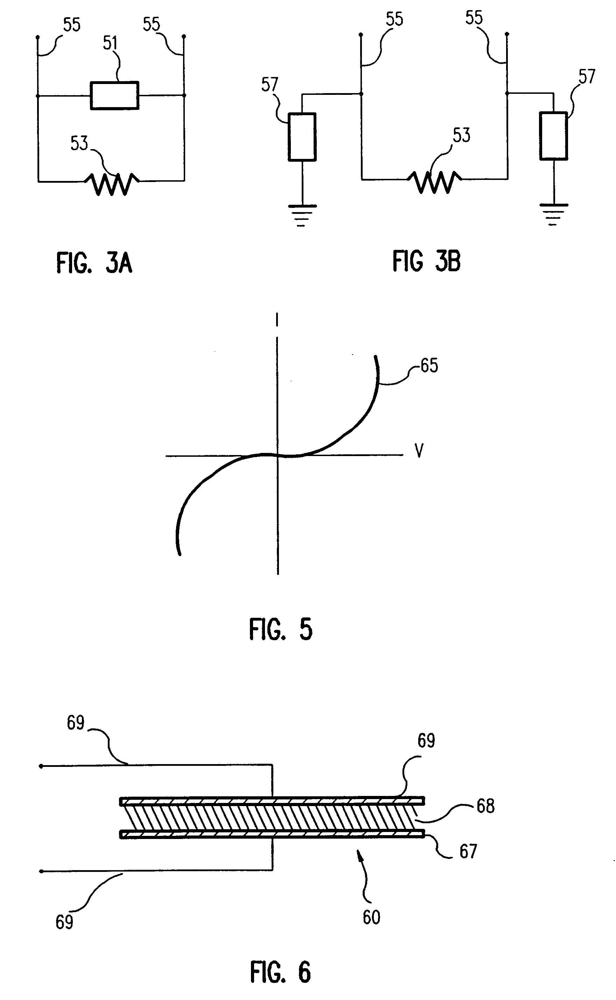

Referring now to Figs. 3a, 3b, 4 and 5, in accordance with the present invention, a preferred embodiment comprises conductive devices 51, 57 having a non-linear current-voltage (I-V) characteristic to provide conductive discharge paths which shunt the MR sensing element 53 (represented as a resistor in Figs. 3a and 3b). As shown in Fig. 3a, a non-linear conductance device 51 connected between the MR element leads 55 effectively shunts any discharge current around the MR element 53. Similarly, as shown in Fig. 3b, non-linear conductive devices 57 are connected between each MR element lead 55 and ground. It is to be noted that the term "ground" as used herein refers to the substrate or slider body or the MR element magnetic shield elements, for example. A variable conductance device having an anti-symmetric I-V characteristic such as that illustrated by curve 65 shown in Fig. 5 is suitable for this purpose.

Fig. 4 is a graph plotted on a logarithmic scale illustrating the I-V characteristic curves for several non-linear devices and for a representative MR element having a nominal resistance of 30 Ohms, curve 59. For a typical device, the resistance is relatively high and decreases as the voltage across the device is increased. For voltages greater than the MR sensing element 53 operating voltage (Vₒₚ), the resistance of the device decreases rapidly and non-linearly with increasing voltage. For example, in a MR circuit with the MR sensing element 53 operating at a nominal voltage of 0.3 volts with a current of 10 milliamperes (mA) and protected by a non-linear device 51 having a voltage-current characteristic illustrated by curve 61, the operating voltage less than 0.5 mA will be shunted by the protective device 51. If the voltage across the MR element 53 increases above about 0.75 volts, the majority of the current in the circuit is through the non-linear device 51 bypassing the MR element 53. In order for the protective device to provide adequate protection for the MR sensing element, it is desirable for the magnitude of the device conducting resistance, i.e., the device "forward resistance", to be as small as practically attainable. Preferably, the ratio of the MR sensing element resistance to the protective device forward resistance is at least 50 to 1 thus providing protection for the MR sensing element up to 2 kv.

Referring now to Figs. 6 and 7, Fig. 6 diagrammatically illustrates a space-charge-limited-conduction (SCLC) device which exhibits the anti-symmetric I-V behaviour as shown in Fig. 5. The SCLC device 60 comprises a pair of electrodes 67 and 69 separated by a layer 68 of suitable semiconducting material. The preferred materials for the semiconducting layer 68 include indium tin oxide (ITO), aluminum-doped ITO, indium oxide (IO), microcrystalline or amorphous hydrogenated silicon (Si:H), for example. The choice of materials for the electrodes 67, 69 is not critical since the device properties are determined by the conduction properties of the intervening semiconducting layer 68. Tantalum (TA), gold (Au), Cu, Permalloy or Sendust, for example, are suitable materials for this purpose. As shown in Fig. 7, an SCLC device 70 may be fabricated using conventional thin film processing techniques, such as sputter deposition or electro-plating, for example. A first layer 73 of a conductive material, such as Ta, for example, is deposited on a suitable surface such as substrate 77. The layer 73 is then suitably patterned to form the first electrode 67. Then a layer 75 of a suitable semiconducting material, ITO, for example, is deposited and patterned to form the semiconducting layer 68. A second layer 71 of a conductive material is then deposited over the semiconducting layer 75 and patterned to form the second electrode 69. The amount of shunting resistance provided by the device 70 is determined by the surface area of the semiconducting layer 75. The thickness of the semiconducting layer 75 is not critical, suitable values of resistance being obtained with a thickness in the range of about 100 nm to 1 µm. The resistance of a device is preferable at least 10 to 100 times the nominal resistance of the MR element thus shunting approximately 1 to 10 percent of the MR element current at its nominal operating voltage. For example, at an operating current of approximately 10 mA, the minimum shunting resistance acceptable would allow no greater than about 0.3 mA leakage current through the protective device. Dependent upon the operating characteristics of the MR sensor and its associated circuitry, leakage currents as great as 50 percent at the nominal operating voltage may be acceptable. Other variable conductance devices having suitable I-V characteristics, such as tunneling diodes, Schottky diodes and Zener breakdown devices, for example, can also be used as protective devices.

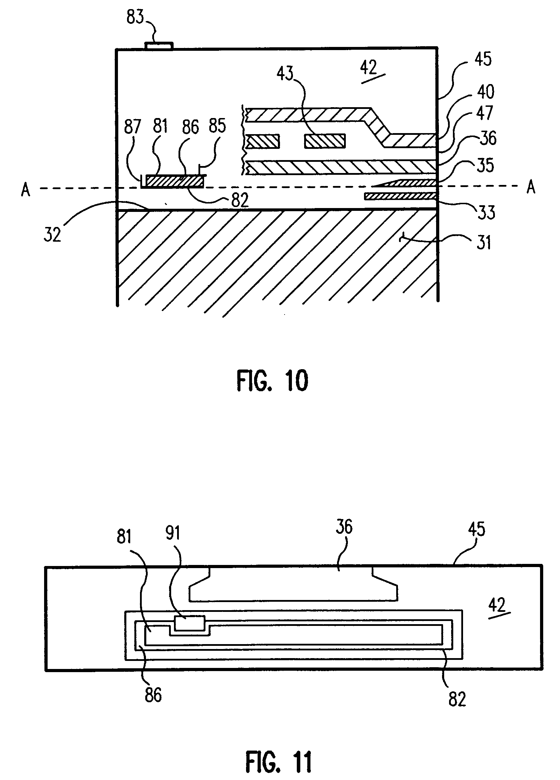

Referring now also to Figs. 8, 9, 10 and 11, in a preferred embodiment according to the present invention, one or more variable conductance devices 80 are fabricated as described above integrally with the magnetic head assembly. As shown in Figs. 8 and 9, a device 80 may be formed on or near the surface of the final layers 42 of insulating material which protect and cover the head assembly. A three-layer device 80 such as that shown in Fig. 6 is fabricated on a surface of one of the insulation layers 42 and comprises top and bottom electrodes 81 and 82, respectively, of Ta, for example, with a layer 86 of semiconducting material, ITO, for example, formed between and in contact with each of the electrodes 81 and 82. Electrode 81 is connected to MR element lead 83 via lead 85 while electrode 82 is connected to the other MR element lead (not shown) via lead 87 to provide a shunt for the MR element 35 as shown schematically in Figure 3a. Fig. 9 is a top view of the device 80 and the head assembly lead connection studs. As shown, the device 80 is connected across the MR element leads 83 and 88 in parallel with the MR element 35. Lead studs 88 provide electrical connections for the inductive coil 43. Fig. 10 illustrates a preferred embodiment as described with reference to Fig. 8 wherein the device 80 is fabricated at approximately the same level within the head assembly, as represented by the dashed line AA, as the MR element 35. Fig. 11 is a top view showing the component layout of the device 80 relative to the head assembly merged magnetic shield and pole piece 36. Via 91 is formed through the semiconducting layer 86 and the upper electrode 81 to provide a connecting lead 87 to be connected to one of the MR element leads.

With continuing reference to Figs. 8 and 10, if the substrate 31 comprises a single crystal semiconductor material, such as single crystal silicon, then the variable conductance devices can be formed directly in the surface 32 of the substrate 31. For example, P-N junction diodes can be fabricated as a first step prior to the subsequent magnetic head fabrication process. Vias are formed in the overlaying layers as the head fabrication process proceeds to provide electrical connections between the variable conductance devices at the substrate surface 32 and the magnetic head elements.

Referring now to Figs. 12a, 12b, 13a and 13b, another preferred embodiment according to the present invention utilizes variable conductance devices having asymmetric I-V characteristics, i.e., allowing current flow only in one direction, such as P-N junction diodes, Zener diodes and Schottky diodes, for example. As shown schematically in Figs. 12a and 12b, a pair of diodes 101 connected in parallel, but reversed polarity, are connected across the leads 55 to provide a shunt path for current away from the MR element 53. Alternately, a pair of diodes 103 similarly configured are connected between each lead 55 and the slider body or the MR element magnetic shields, represented as a ground connection in Figs. 12b and 13b. Some Schottky diodes, for example, have a relatively low "turn-on" voltage in the range of 0.2 to 0.3 volts, and fast response time due to a lack of space charge buildup in the junction region. The Schottky device is based on a metal-semiconductor junction making its fabrication compatible with the vacuum deposition techniques described above with reference to Figs. 6 - 11.

Figs. 13a and 13b are diagrams illustrating the physical arrangement and connections in an MR read assembly wherein Schottky diodes are fabricated integrally with the MR sensing element 53 and conductor leads 55. The diagrams shown in Figs. 13a and 13b corresponding to the circuits shown in Figs. 12a and 12b, respectively. For an MR sensor element 53 having a nominal resistance of 20 Ohms and an operating sense current of about 10 mA, the nominal operation voltage across the MR sensing element is about 0.2 volts. To prevent degradation of the MR sensor operation, at the nominal operating current and voltage, the protective device preferably allows a leakage current less than 10 percent of the MR element sense current. It has been demonstrated that a Schottky diode 101a, for example, having a cross-sectional area at the junction between the two elements 105 and 107, of approximately 3.3x10⁻⁴cm² will provide a resistance at 0.2 volts of approximately 30 times that of the MR sensing element 53. This corresponds to a circular area about 200 µ in diameter. A 50 percent slider provides a trailing edge vertical surface area of about 425 µm by 1600 µm, which would easily accommodate the physical space requirements for both the configurations shown in Figs. 13a and 13b. Alternatively, diodes can be deposited on the back or upper surface of the slider which provides more available surface area.

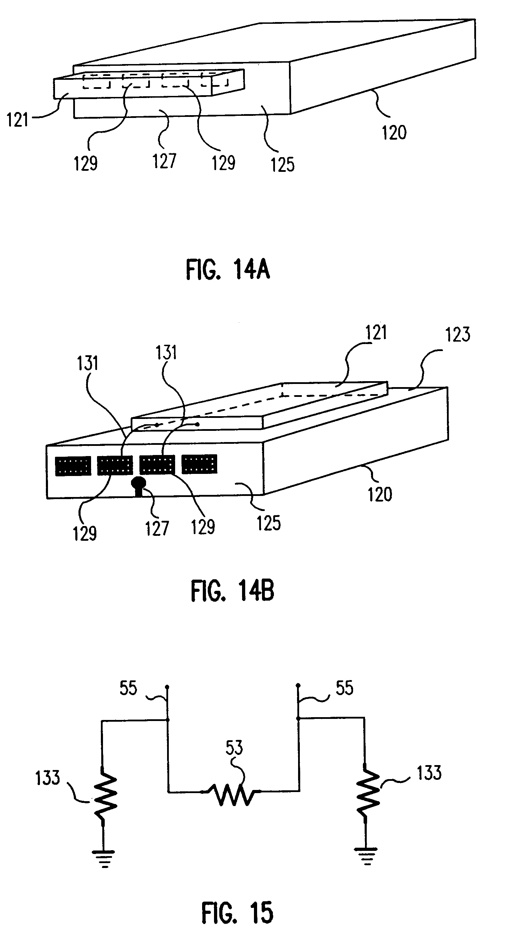

Alternatively, one or more variable conductance devices, such as a pair of P-N junction diodes or Schottky diodes, for example, are fabricated separately and then mounted directly on the magnetic head slider. As shown in Figs. 14a and 14b, a non-linear variable conductance device 121 is mounted directly on a vertical surface 125 or the top surface 123 of slider 120. The variable conductance device 121 is electrically connected to the magnetic head 127 and MR conductive leads 129 by conductors 131. The variable conductance device 121 can be one or pairs of reverse connected diodes connected as shown in Figs. 12a and 12b, or can be a single device having an anti-symmetric I-V characteristic connected as shown in Figs. 3a and 3b. Alternatively, the variable conductance devices can be mounted on the slider suspension 15 or support arm 19 (as shown in Fig. 1) or integrated with other external circuitry on a chip or circuit board, such as an arm electronic module chip, for example.

As is known in the art, diodes and other variable conductance devices discussed herein exhibit finite values of capacitance. While the device capacitance cannot be eliminated, in general the magnitude of the capacitance can be controlled to provide desirable frequency-dependent discharge mechanisms in addition to the DC discharge path. However, capacitance values which provide maximum frequency-dependent protection for the MR sensing element during the fabrication and assembly process may interfere with the subsequent operation of the MR sensor in a magnetic storage system. If desirable, the protective devices can be removed from the MR sensor circuit at the conclusion of the fabrication and assembly process by physically removing the device or by merely opening the leads connecting the device to the MR sensing element. For example, as shown in Fig. 9, a device 80 formed on the trailing edge vertical surface 46 of slider 45 and connected to the MR element leads 83, 88 by leads 85, 87, respectively, can be removed from the circuit by opening the device leads 85, 87 by laser ablation or other suitable process, such as ion milling or chemical etching.

Referring now also to Fig. 15, in accordance with the present invention, another preferred embodiment comprises bleed resistors 133, 135 connected between the MR sensor leads 55 and the MR element magnetic shield elements or the slider body (represented as a ground connection), for example, to provide high resistance conductive discharge paths which shunt the MR sensor element 53. The bleed resistors 133,135 preferably have a resistance of about 10 to 100 times the resistance of the MR sensor element 53 thus shunting approximately 1 to 10 percent of the MR element current at its nominal operating voltage. The bleed resistors can be fabricated integrally with the magnetic head using well-known techniques as described above with reference to Figs. 6-11. Alternatively, the bleed resistors can be fabricated separately and externally mounted on the slider surface or with other components and connected to the MR sensor element leads as described above with reference to Figs. 14a and 14b.

## Claims

1. A magnetoresistive head assembly comprising:
a magnetoresistive sensor element; and
at least one variable conductance means having a non-linear current-voltage characteristic electrically coupled to the magnetoresistive sensor element for providing a low resistance conductive path bypassing the magnetoresistive sensor element for discharging static electrical charge.

2. A magnetoresistive head assembly as claimed in Claim 1 further comprising at least two conductive leads electrically connected to the magnetoresistive sensor element at spaced apart positions, the conductance means connected between two of the conductive leads in parallel with the magnetoresistive sensor element.

3. A magnetoresistive head assembly as claimed in Claim 1 further comprising at least two conductive leads electrically connected to the magnetoresistive sensor element at spaced apart positions, at least one of the variable conductance means connected between each of the conductive leads and a ground reference.

4. A magnetoresistive head assembly as claimed in Claim 3 wherein the ground reference comprises a magnetic shielding element for the magnetoresistive sensor element.

5. A magnetoresistive head assembly as claimed in any of Claims 3 or 4 wherein the ground reference comprises a slider.

6. A magnetoresistive head assembly as claimed in any of the preceding claims wherein the variable conductance means is fabricated integrally with the magnetoresistive head assembly.

7. A magnetoresistive head assembly as claimed in any of the preceding claims wherein the variable conductance device is a space charge limited conduction (SCLC) device comprising a pair of metal electrode plates separated by a layer of semiconductor material, the layer of semiconductor material in contact with each of the metal electrode plates.

8. A magnetoresistive head assembly as claimed in Claim 7 further comprising at least one layer of insulating material covering the magnetoresistive element, the SCLC device formed on a surface of one of the layers of insulating material by vacuum deposition techniques.

9. A magnetoresistive head assembly as claimed in Claim 7 or Claim 8 wherein the SCLC device comprises a first layer of tantalum, a layer of semiconductor material formed over the first layer of tantalum and a second layer of tantalum formed over the layer of semiconductor material, each of the first and second layers of tantalum electrically connected to opposite ends of the magnetoresistive sensor element.

10. A magnetoresistive head assembly as claimed in any of Claims 7 to 9 wherein the semiconductor layer is a material selected from the group consisting of indium tin oxide, metal-doped indium tin oxide and hydrogenated silicon.

11. A magnetoresistive head assembly as claimed in any of the preceding claims wherein the variable conductance device comprises a Schottky diode.

12. A magnetoresistive head assembly as claimed in any of Claims 1 to 10 wherein the variable conductance device comprises a tunnel diode.

13. A magnetoresistive head assembly as claimed in any of Claims 1 to 10 wherein the variable conductance device comprises a P-N junction diode.

14. A magnetoresistive head assembly as claimed in any of Claims 1 to 10 wherein the variable conductance device comprises a Poole-Frankel device.

15. A magnetoresistive head assembly as claimed in any of Claims 1 to 10 wherein the variable conductance device comprises a Zener diode.

16. A magnetoresistive head assembly as claimed in any of the preceding claims wherein the ratio of the resistance of the magnetoresistive sensor element to the forward resistance of the variable conductance means is at least 50 to 1.

17. A magnetoresistive head assembly comprising:
a magnetoresistive sensor element; and
at least one bleed resistor electrically coupled to the magnetoresistive sensor element for providing a high resistance discharge path shunting the magnetoresistive sensor element for discharging static electric charge.

18. A magnetoresistive head assembly as claimed in Claim 17 further comprising at least two conductive leads electrically connected to the magnetoresistive sensor element at spaced apart positions, at least one the bleed resistor connected between each of the conductive leads and a ground reference.

19. A magnetoresistive head assembly as claimed in any of Claims 17 or 18 wherein each the bleed resistor has a resistance of approximately 10 to 100 times the resistance of the magnetoresistive sensor element.

20. A magnetic storage system comprising:
a magnetic storage medium having at least one track for recording of data;
a magnetic transducer maintained in a closely spaced position relative to the magnetic storage medium during relative motion between the magnetic transducer and the magnetic storage medium, the magnetic transducer including a magnetoresistive sensor formed on a substrate comprising:
a magnetoresistive sensor element; and
at least one conductance means
electrically coupled to the magnetoresistive sensor
element for providing a conductive path
bypassing the magnetoresistive sensor element for
discharging static electric charge;
actuator means coupled to the magnetic transducer for moving the magnetic transducer to selected tracks on the magnetic storage medium; and
means coupled to the magnetoresistive sensor for detecting resistance changes in the magnetoresistive sensor element responsive to magnetic fields representative of data bits recorded in the magnetic storage medium intercepted by the magnetoresistive sensor.

21. A magnetic storage system as claimed in Claim 20 wherein the conductance means comprises a variable conductance means having a nonlinear current-voltage characteristic.

22. A magnetic storage system as claimed in Claim 20 wherein the conductance means comprises a bleed resistor, the magnetoresistive sensor element having at least two conductive leads electrically connected to the magnetoresistive sensor element at spaced positions, at least one the bleed resistor connected between each of the conductive leads and a ground reference.
